# EUROPÄISCHE PATENTSCHRIFT

(11) **EP 2 199 229 B1**
(45) Veröffentlichungstag und Bekanntmachung des Hinweises auf die Patenterteilung: **29.08.2012**
(21) Anmeldenummer: 09015114.3
(22) Anmeldetag: 07.12.2009
(51) Int. Cl.: B65G 1/04, B66F 9/14

(54) **Lastaufnahmemittel für ein Regalbediengerät, Förderanlage mit einem Regalbediengerät und Verfahren zum Betreiben einer Förderanlage**
Load-carrying assembly for a shelf serving device, supply assembly with a shelf serving device and method for operating a supply assembly
Moyen de réception de charge pour un appareil de commande de rayonnage, installation de transport dotée d'un appareil de commande de rayonnage et procédé de fonctionnement de l'installation de transport

(30) Priorität: 19.12.2008 DE 102008064533
(43) Veröffentlichungstag der Anmeldung: 23.06.2010
(73) Patentinhaber: viastore systems GmbH, 70469 Stuttgart (DE)
(72) Erfinder: Hahn-Woernle, Christoph, 70193 Stuttgart (DE)
(74) Vertreter: Wilhelm, Martin

(56) Entgegenhaltungen:
- DE-A1- 19 836 764
- DE-U1- 20 021 029
- DE-U1- 29 921 514
- JP-A- 8 175 623
- US-A- 4 925 005

## Beschreibung

Die Erfindung betrifft ein Lastaufnahmemittel für ein Regalbediengerät nach Anspruch 1 mit einem Transportband für Ladeguteinheiten, einer Aushubeinrichtung für Ladeguteinheiten, um Ladeguteinheiten wahlweise vom Transportband abzuheben und wieder auf dieses abzusenken. Die Erfindung betrifft auch eine Förderanlage nach Anspruch 10 mit einem Regalbediengerät, das ein Lastaufnahmemittel aufweist. Die Erfindung betrifft auch ein Verfahren nach Anspruch 13 zum Betreiben einer Förderanlag mit einem Regalbediengerät, das ein Lastaufnahmemittel aufweist.

Aus dem deutschen Gebrauchsmuster DE 20 0021 029 U1 ist ein Lastaufnahmemittel für ein Regalbediengerät mit wenigstens einem Transportband für Ladeguteinheiten und einer Aushubeinrichtung für Ladeguteinheiten bekannt entsprechend dem oberbegriff von Anspruch 1. Die Aushubeinrichtung ist in Form von zwei zueinander parallelen Tragschienen vorgesehen und dafür ausgelegt, Ladeguteinheiten wahlweise vom Transportband abzuheben und wieder auf dieses abzusenken. Die Tragschienen weisen jeweils einen parallel zum Transportband verlaufenden Auflagebereich und einen in einem Winkel von etwas mehr als 90° zu diesem Auflagebereich angeordneten Seitenwandbereich auf. Mittels der beiden Seitenwandbereiche kann eine schief oder seitlich versetzt auf dem Transportband aufsitzende Ladeguteinheit gleichzeitig mit dem Anheben vom Transportband wieder in die korrekte, mittig zum Transportband angeordnete Position gebracht werden. In Längsrichtung des Transportbandes gesehen sind hintereinander zwei Paare von zueinander parallel angeordneten und anhebbaren und absenkbaren Tragschienen vorgesehen. Die Tragschienen sollen dabei nicht nur zum Anheben und Absenken von Ladegut, sondern auch als Endanschläge zur Definition von Endpositionen des Ladeguts in Längsrichtung des Transportbandes dienen.

Mit der Erfindung soll ein Lastaufnahmemittel für ein Regalbediengerät, eine Förderanlage mit einem Regalbediengerät und ein Verfahren zum Betreiben einer Förderanlage bereitgestellt werden, die flexibel einsetzbar und zuverlässig realisierbar sind.

Erfindungsgemäß ist hierzu ein Lastaufnahmemittel für ein Regalbediengerät mit einem Transportband für Ladeguteinheiten und einer Aushubeinrichtung für Ladeguteinheiten, um Ladeguteinheiten wahlweise vom Transportband abzuheben und wieder auf dieses abzusenken, vorgesehen, bei dem wenigstens ein Abstandhalter vorgesehen ist, wobei der Abstandshalter an dem Lastaufnahmemittel bewegbar und relativ zu den Ladeguteinheiten so anordenbar ist, um wenigstens eine Ladeguteinheit unter wenigstens einer mittels der Aushubeinrichtung bereits angehobenen Ladeguteinheit unabhängig von der Stellung der Aushubeinrichtung in einem vom Transportband abgehobenen Zustand zu halten.

Durch eine solche Ausbildung eines Lastaufnahmemittels kann das Transportband unabhängig davon, ob sich Ladegut bereits auf dem Lastaufnahmemittel befindet, in Betrieb gesetzt werden. Ladeguteinheiten können dadurch auf das Lastaufnahmemittel übernommen werden, ohne dass bereits auf dem Lastaufnahmemittel befindliche Ladeguteinheiten mitbewegt werden müssen. Indem eine Aushubeinrichtung und ein Abstandshalter vorgesehen sind, kann eine konstruktiv einfache und sehr zuverlässige Ausführung realisiert werden. Speziell erlaubt es die Kombination einer Aushubeinrichtung und wenigstens eines Abstandshalters, im Wesentlichen an beliebigen Stellen auf dem Lastaufnahmemittel angeordnete Ladeguteinheiten vom Transportband abzuheben, im abgehobenen Zustand zu halten oder wieder auf das Transportband abzusenken. Dies kann dabei durch konstruktiv vergleichsweise einfach aufgebaute Aushubeinrichtungen und Abstandshalter erreicht werden, da der Abstandshalter lediglich unter ein mittels der Aushubeinrichtung bereits angehobene Ladeguteinheit bewegt werden muss, aber nicht in der Lage sein muss, das Ladegut selbst anzuheben oder abzusenken. Der Erfindung liegt somit die Erkenntnis zugrunde, dass ein sehr flexibler Einsatz eines Lastaufnahmemittels auch durch die geschickte Kombination einer Aushubeinrichtung mit einem am Lastaufnahmemittel bewegbar angeordneten Abstandshalter möglich ist.

In Weiterbildung der Erfindung greift der wenigstens eine Abstandshalter von unten und/oder seitlich an gegenüberliegenden Seiten einer Ladeguteinheit an.

Auf diese Weise kann ein Transportband zwischen zwei Abstandshaltern angeordnet werden und beim Aufsitzen einer Ladeguteinheit auf den Abstandshaltern werden an der Ladeguteinheit symmetrische Kraftverteilungen erreicht.

In Weiterbildung der Erfindung ist der wenigstens eine Abstandshalter längs einem Transportweg auf dem Lastaufnahmemittel bewegbar angeordnet.

Auf diese Weise kann der Abstandshalter in eine gewünschte Position entlang dem Transportweg auf dem Lastaufnahmemittel angeordnet werden. Wenn sich beispielsweise vier Ladeguteinheiten auf dem Lastaufnahmemittel befinden, kann der Abstandshalter unter diejenige Ladeguteinheit bewegt werden, die vom Transportband beabstandet sein soll.

In Weiterbildung der Erfindung ist der Abstandshalter im Wesentlichen entlang der gesamten Länge der Aushubeinrichtung bewegbar.

Auf diese Weise wird eine größtmögliche Flexibilität erreicht, da eine von der Aushubeinrichtung bereits angehobener Ladeguteinheit sich im Wesentlichen an einer beliebigen Stelle befinden kann und der Abstandshalter dann unter diese Ladeguteinheit verfahren werden kann, um diese im vom Transportband abgehobenen Zustand zu halten.

In Weiterbildung der Erfindung ist der wenigstens eine Abstandshalter an einem am Lastaufnahmemittel umlaufenden Antriebsmittel angeordnet.

Auf diese Weise kann der Abstandshalter in beliebige Positionen entlang dem Lastaufnahmemittel gebracht werden, wobei lediglich ein Elektromotor erforderlich ist, der das umlaufende Antriebsmittel antreibt. Beispielsweise kann ein umlaufender Riemen oder eine umlaufende Kette vorgesehen sein. Eine umlaufende Kette ist dabei vorteilhaft, da kein Schlupf zwischen Antriebsrad und Kette befürchtet werden muss und daher der Abstandshalter exakt und zuverlässig positioniert werden kann.

In Weiterbildung der Erfindung sind auf dem Antriebsmittel wenigstens zwei voneinander beabstandete Nockengruppen angeordnet, wobei jeder Nockengruppe eine Ladeguteinheit zugeordnet werden kann.

Indem jede Nockengruppe einer Ladeguteinheit zugeordnet werden kann, kann ein sicherer Halt der Ladeguteinheiten auf den Abstandshaltern gewährleistet werden. Indem Nockengruppen statt durchgängige Auflageleisten vorgesehen sind, kann das Antriebsmittel, beispielsweise ein Kette, trotz großer Auflageflächen für die Ladeguteinheiten über ein platzsparendes, kleines Umlenkrad umgelenkt werden. Die Anordnung und Beabstandung der Nockengruppen voneinander wird auf die zu lösenden Transportaufgaben und Umlagerungsaufgaben auf dem Lastaufnahmemittel abgestimmt. Beispielsweise sind bei einem für vier Ladeguteinheiten vorgesehenen Lastaufnahmemittel drei Nockengruppen vorgesehen, die so voneinander beabstandet sind, dass sie für drei unmittelbar nebeneinander liegende Ladeguteinheiten vorgesehen sind.

In Weiterbildung der Erfindung sind zwei umlaufende Antriebsmittel mit Nocken oder Nockengruppen vorgesehen, die quer zur Transportrichtung auf dem Lastaufnahmemittel voneinander beabstandet sind.

Durch Vorsehen zweier umlaufender Antriebsmittel können die Ladeguteinheiten sicher auf zwei voneinander beabstandeten Nocken oder Nockengruppen abgestellt werden. Idealerweise werden die Antriebsmittel so angeordnet, dass ein Transporttisch mit einem Transportband zwischen den Antriebsmitteln mit den Nocken oder Nockengruppen angeordnet ist. Eine Aushubeinrichtung kann dann beispielsweise beidseitig auf der jeweiligen Außenseite der Antriebsmittel angeordnet sein.

In Weiterbildung der Erfindung ist die Aushubeinrichtung ausgebildet, um alle auf dem Transportband befindlichen Ladeguteinheiten gleichzeitig anzuheben.

Auf diese Weise erstreckt sich die Aushubeinrichtung im Wesentlichen über die gesamte Länge des Lastaufnahmemittels. Die Aushubeinrichtung kann dadurch vergleichsweise einfach und beispielsweise mittels einer anhebbaren Winkelschiene ausgebildet werden. Dennoch kann das erfindungsgemäße Lastaufnahmemittel äußerst flexibel eingesetzt werden, da mittels der Abstandshalter ein oder mehrere beliebige Ladeguteinheiten auf dem Lastaufnahmemittel im vom Transportband abgehobenen Zustand gehalten werden können. Es ist dadurch ohne weiteres möglich, eines oder mehrere Ladeguteinheiten in beliebiger Richtung vom Lastaufnahmemittel abzufördern und eine beliebige Anzahl von Ladeguteinheiten auf dem Lastaufnahmemittel zu belassen.

In Weiterbildung der Erfindung weist die Aushubeinrichtung wenigstens zwei Anschlagsleisten auf, die seitlich und/oder von unten an einer Ladeguteinheit angreifen können.

Auf diese Weise wird bei einfachem Aufbau ein sicheres Anheben und Abheben vom Transportband ermöglicht. Beispielsweise weist die Aushubeinrichtung zwei Winkelschienen auf, die sich im Wesentlichen über die gesamte Länge des Lastaufnahmemittels erstrecken. Zwischen dem Transportband und den Winkelschienen kann dann jeweils ein umlaufendes Antriebsmittel mit Nocken oder Nockengruppen als Abstandshalter angeordnet sein. Die Anschlagsleisten können gleichzeitig eine Zentrierung der Ladeguteinheiten zu einer Längsachse beim Anheben bewirken.

In Weiterbildung der Erfindung weist die Aushubeinrichtung wenigstens eine Kulissenführung auf.

Auf diese Weise kann die Aushubeinrichtung konstruktiv einfach und wenig störanfällig ausgebildet werden. Beispielsweise laufen Anschlagsleisten oder Winkelschienen der Aushubeinrichtung mit Rollen auf einer Kulissenführung und können durch einfaches, transversales Verschieben der Kulissenführung senkrecht zum Transportband angehoben und abgesenkt werden.

In Weiterbildung der Erfindung ist ein ausfahrbarer Transporttisch vorgesehen, wobei das Transportband im Bereich der Oberseite des Transporttisches geführt ist.

Auf diese Weise muss eine Ladeguteinheit, wenn sie unabhängig von einer Bewegung des Transportbandes auf dem Lastaufnahmemittel verbleiben soll, lediglich um einen geringen Höhenbetrag vom Transportband abgehoben werden. Die Abstandshalter können dadurch vergleichsweise klein und beispielsweise als kompakte Nocken auf einer umlaufenden Kette ausgebildet sein.

In Weiterbildung der Erfindung sind zum Antreiben des Transportbands und zum Antreiben des Transporttisches separate Antriebsmotoren vorgesehen, wobei der Antriebsmotor des Transportbandes so angeordnet ist oder so angesteuert werden kann, dass sich das Transportband im Bereich der Oberseite des Transporttisches beim Ausfahren des Transporttisches relativ zu dessen Oberseite nicht bewegt.

Auf diese Weise kann sichergestellt werden, dass der vom Lastaufnahmemittel weg in Richtung auf einen Regalplatz ausfahrbare Transporttisch ausgefahren werden kann, ohne dass sich eine auf dem Transportband befindliche Ladeguteinheit relativ zum Transporttisch bewegt.

Eine Position der Ladeguteinheit relativ zum Transporttisch, die der Ladeguteinheit beispielsweise nach der Übernahme auf das Lastaufnahmemittel zugeordnet wird, bleibt dadurch bis zu dem Zeitpunkt erhalten, an dem sich der ausgefahrene Transporttisch unmittelbar vor dem Regalplatz befindet, in den die Ladeguteinheit eingebracht werden soll und das Transportband angesteuert wird, um die Ladeguteinheit vom Transporttisch in den Regalplatz einzubringen.

Das der Erfindung zugrundeliegende Problem wird auch durch eine Förderanlage mit einem Regalbediengerät gelöst, das mit einem erfindungsgemäßen Lastaufnahmemittel versehen ist, bei der wenigstens ein Zwischenspeicherplatz für wenigstens eine Ladeguteinheit vorgesehen ist.

Durch Vorsehen eines Zwischenspeicherplatzes, der beispielsweise ortsfest im Bereich eines Einlagerübergabeplatzes oder auch unmittelbar am Lastaufnahmemittel angeordnet sein kann, wird es möglich, mittels Auslagern und Wiederaufnehmen von Ladeguteinheiten eine Reihenfolge von auf dem Lastaufnahmemittel angeordneten Ladeguteinheiten verändern zu können. Dadurch können Ein- und Auslagerungsvorgänge optimiert werden, und die Fahrzeiten des Regalbediengerätes werden deutlich verringert. Beispielsweise können Ladeguteinheiten nach dem Umlagern in umgekehrter Reihenfolge eingelagert werden. Dies ist von erheblichem Vorteil, wenn dadurch eine zusätzliche Fahrt des Regalbediengerätes oder auch nur ein zusätzlicher Richtungswechsel des Regalbediengerätes im Hochregallager vermieden werden kann. Durch Vorsehen eines Zwischenspeicherplatzes ist es beispielsweise aber auch möglich, sicherzustellen, dass das Lastaufnahmemittel in der Mehrzahl aller Fälle immer voll beladen zu den Regallagerplätzen fährt. Beispielsweise kann dann, wenn eine einzelne Ladeguteinheit zur Einlagerung ansteht, die Ladeguteinheit auf dem Zwischenspeicherplatz abgestellt werden, bis beispielsweise weitere Ladeguteinheiten zum Einlagern bereitstehen, die an denselben Regalplatz oder an Regalplätze in unmittelbarer Umgebung eingelagert werden sollen. Auf diese Weise lässt sich die Anzahl an Leerfahrten oder nur teilweise besetzten Fahrten des Lastaufnahmemittels erheblich reduzieren.

In Weiterbildung der Erfindung ist der wenigstens eine Zwischenspeicherplatz an einem Einlagerübergabeplatz vorgesehen.

In Weiterbildung der Erfindung ist ein Einlagerübergabeplatz gegenüberliegend einem Auslagerübergabeplatz angeordnet, so dass das Lastaufnahmemittel zwischen dem Einlagerübergabeplatz und dem Auslagerübergabeplatz angeordnet werden kann.

Auf diese Weise ist das gleichzeitige Abgeben von Ladeguteinheiten von dem Lastaufnahmemittel auf den Auslagerübergabeplatz und das Aufnehmen von Ladeguteinheiten vom Einlagerübergabeplatz auf das Lastaufnahmemittel möglich. Dadurch kann Zeit eingespart und der Durchsatz der erfindungsgemäßen Förderanlage erhöht werden. Falls eine Erhöhung des Durchsatzes nicht das primäre Ziel ist, kann beispielsweise auch die Fahrgeschwindigkeit verringert werden, um die erfindungsgemäße Förderanlage mit ausreichendem Durchsatz aber materialschonend betreiben oder kostengünstig ausführen zu können.

In Weiterbildung der Erfindung ist ein Verfahren zum Betreiben einer Förderanlage mit wenigstens einem Regalbediengerät vorgesehen, das ein erfindungsgemäßes Lastaufnahmemittel aufweist, bei dem die Schritte des Übernehmens wenigstens einer Ladeguteinheit auf das Lastaufnahmemittel an einem Einlagerübergabeplatz, des Abhebens der Ladeguteinheit von einem Transportband des Lastaufnahmemittels und des nachfolgenden Übernehmens, Umlagerns, Verdichtens und/oder Auslagerns in einen Regalplatz wenigstens einer weiteren Ladeguteinheit vorgesehen sind.

Durch Umlagern, Verdichten und/oder Auslagern von Ladeguteinheiten können Leerfahrten oder Fahrten mit nur teilweiser Belegung des Lastaufnahmemittels weitgehend reduziert werden.

In Weiterbildung der Erfindung ist das gleichzeitige Übernehmen von Ladeguteinheiten auf das Lastaufnahmemittel vom Einlagerübergabeplatz und das Abgeben von Ladeguteinheiten vom Lastaufnahmemittel auf den Auslagerübergabeplatz vorgesehen.

In Weiterbildung der Erfindung ist das Ändern der Reihenfolge mehrerer auf dem Lastaufnahmemittel angeordneter Lageguteinheiten an einem Zwischenspeicherplatz vorgesehen.

In Weiterbildung der Erfindung ist das Sortieren von Ladeguteinheiten auf dem Lastaufnahmemittel nach deren Höhe vorgesehen.

Auf diese Weise können effiziente Einlagervorgänge organisiert werden, wenn beispielsweise Ladeguteinheiten mit geringer Höhe in bestimmten Regalbereichen und Ladeguteinheiten mit größerer Höhe in anderen Regalbereichen eingelagert werden. Durch Sortieren von Ladeguteinheiten auf dem Lastenaufnahmemittel nach ihrer Höhe können beispielsweise alle niedrigen Ladeguteinheiten zuerst und erst nachfolgend alle hohen Ladeguteinheiten eingelagert werden. Auf diese Weise lassen sich zusätzliche Richtungswechsel, Fahrten mit teilweiser Belegung oder Leerfahrten des Lastaufnahmemittels wesentlich reduzieren.

Weitere Merkmale und Vorteile der Erfindung ergeben sich auch aus den Ansprüchen und der nachfolgenden Beschreibung bevorzugter Ausführungsformen der Erfindung im Zusammenhang mit den Zeichnungen. Einzelmerkmale der unterschiedlichen, in den Zeichnungen dargestellten und beschriebenen Ausführungsformen lassen sich dabei in beliebiger Weise miteinander kombinieren, ohne den Rahmen der Erfindung zu überschreiten. In den Zeichnungen zeigen:
- Fig. 1: eine Vorderansicht eines erfindungsgemäßen Lastaufnahmemittels bei angehobener Aushubeinrichtung,
- Fig. 2: die vergrößerte Einzelheit II der Fig. 1,
- Fig. 3: das Lastaufnahmemittel der Fig. 1 bei abgesenkter Aushubeinrichtung,
- Fig. 4: die vergrößerte Einzelheit IV der Fig. 3,
- Fig. 5, 6 und 7: abschnittsweise Ansichten des Lastaufnahmemittels der Fig. 1 in unterschiedlichen Betriebszuständen,
- Fig. 8: eine Ansicht des Lastaufnahmemittels der Fig. 1 in einer Ansicht von schräg oben bei eingefahrenem Transporttisch,
- Fig. 9: das Lastaufnahmemittel der Fig. 8 bei ausgefahrenem Transporttisch,
- Fig. 10: die vergrößerte Einzelheit X der Fig. 9,
- Fig. 11: eine Darstellung einer Kulissenführung zum Betätigen der Aushubeinrichtung bei dem Lastaufnahmemittel der Fig. 1,
- Fig. 12: eine Darstellung des Transporttisches mit Transportbändern des Lastaufnahmemittels der Fig. 1,
- Fig. 13: eine schematische Darstellung von Möglichkeiten der Belegung des erfindungsgemäßen Lastaufnahmemittels mit Ladeguteinheiten,
- Fig. 14: eine schematische Darstellung einer erfindungsgemäßen Förderanlage,
- Fig. 15, 16 und 17: schematische Darstellungen zur Verdeutlichung des Betriebs eines erfindungsgemäßen Lastaufnahmemittels,

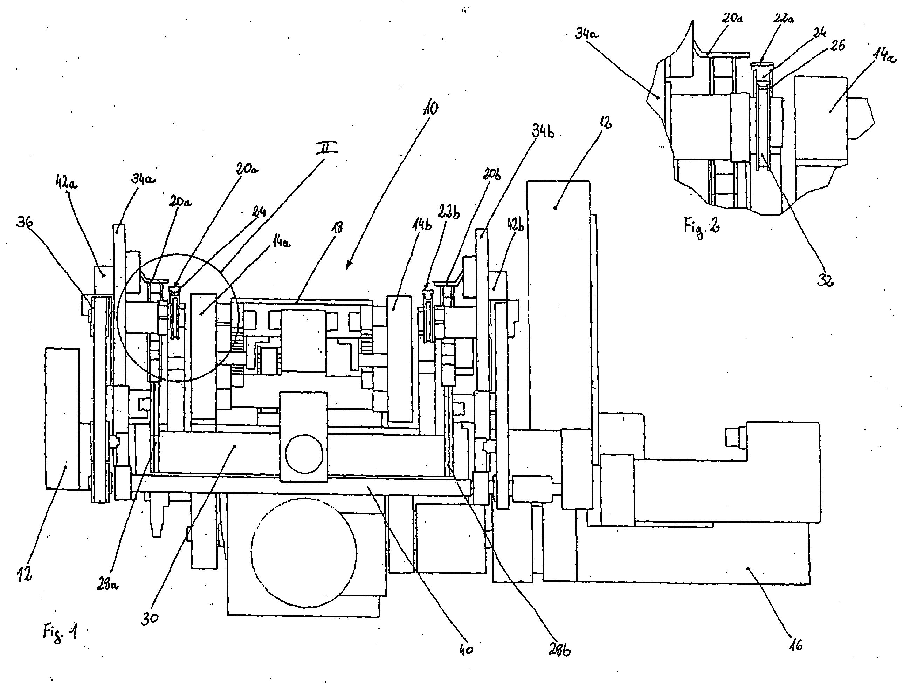

Die Vorderansicht der Fig. 1 zeigt ein erfindungsgemäßes Lastaufnahmemittel 10 mit einem Rahmen 12, der an einem nicht dargestellten Mast verfahrbar befestigt werden kann. Der Mast selbst ist wiederum verfahrbar in einer Lagergasse eines Hochregallagers angeordnet, so dass das Lastaufnahmemittel 10 an einen Einlagerübergabeplatz gebracht werden kann, an dem Ladeguteinheiten von geeigneter Fördertechnik übernommen werden können, und auch an einen beliebigen Regalplatz in Hochregallager verfahren werden kann, in den dann Ladeguteinheiten eingelagert werden sollen. In gleicher Weise kann das Lastaufnahmemittel 10 auch von einem Regalplatz zu einem Auslagerübergabeplatz verfahren werden, an dem Ladeguteinheiten auf eine geeignete Fördertechnik übergeben werden.

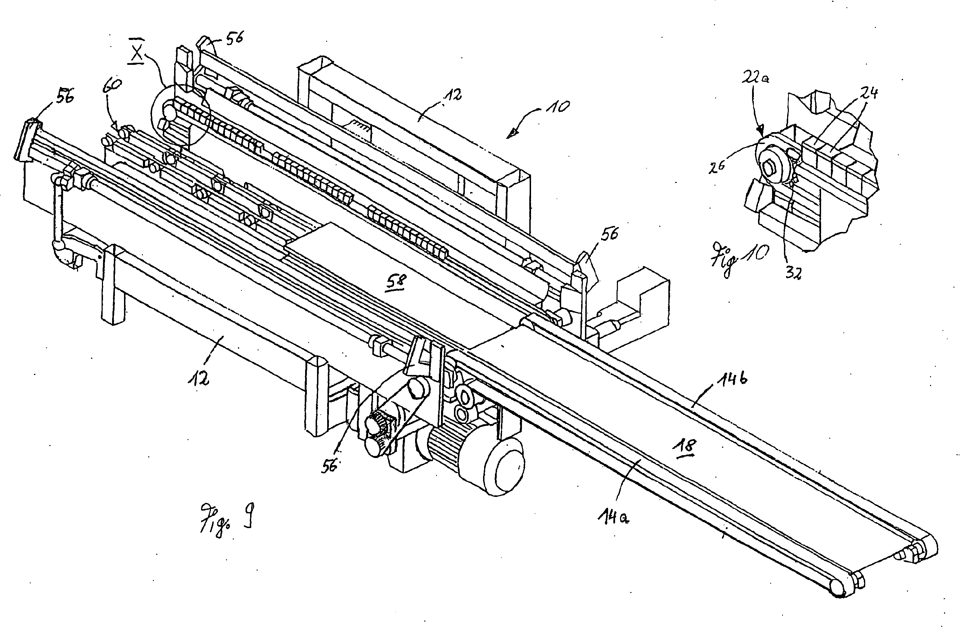

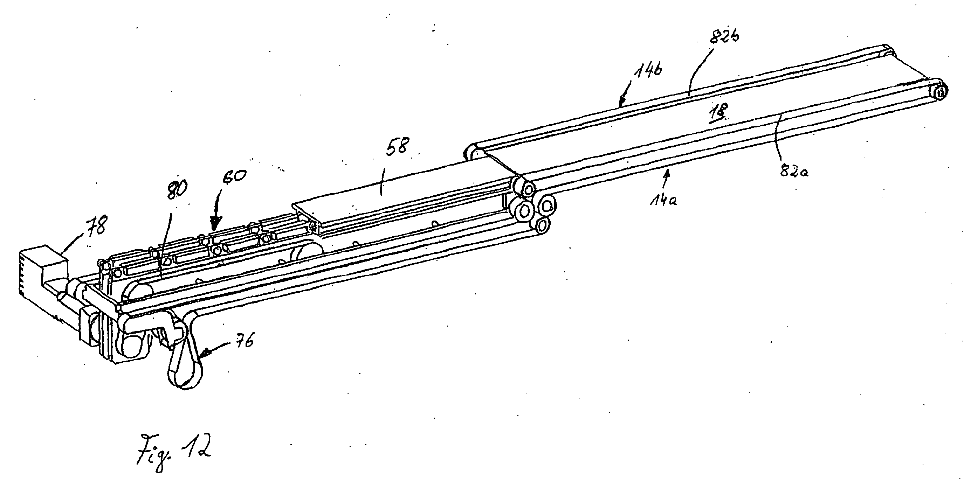

Das Lastaufnahmemittel 10 ist mit zwei Transportbändern 14a, 14b versehen, die synchron zueinander mittels eines Antriebsmotors 16 bewegt werden können. Die beiden Transportbänder 14a, 14b sind an einem Transporttisch 18 umgelenkt, der teleskopartig ausgefahren werden kann, wie nachfolgend im Zusammenhang mit Fig. 9 und Fig. 12 noch erläutert wird. Die Transportbänder 14a, 14b sind dafür vorgesehen, dass Ladeguteinheiten in Form von Kisten oder Ladeboxen darauf abgesetzt werden. Mittels der Transportbänder 14a, 14b können die Ladeguteinheiten von einem Einlagerübergabeplatz auf den Transporttisch 18 befördert werden oder von dem Transporttisch 18 in einen Regalplatz oder an einen Auslagerübergabeplatz befördert werden.

Um bei mehreren, auf dem Transporttisch 18 befindlichen Ladeguteinheiten auch einzelne Ladeguteinheiten mittels der Transportbänder 14a, 14b abtransportieren und andere Ladeguteinheiten dahingegen auf dem Lastaufnahmemittel 10 belassen zu können, ist eine Aushubeinrichtung mit zwei Winkelschienen 20a, 20b vorgesehen, die in der Darstellung der Fig. 1 rechts bzw. links der Transportbänder 14a, 14b angeordnet sind. Die Winkelschienen 20a, 20b sind dafür vorgesehen, seitlich unter eine Ladeguteinheit in Form einer Box oder Kiste zu greifen und den Boden der Ladeguteinheit dann soweit vom Transporttisch 18 zu entfernen, dass dieser nicht mehr auf den Transportbändern 14a, 14b aufliegt. In der Darstellung der Fig. 1 sind die Winkelschienen 20a, 20b in einem angehobenen Zustand dargestellt. Eine Ladeguteinheit würde demzufolge ausschließlich auf den beiden Winkelschienen 20a, 20b ruhen und die Transportbänder 14a, 14b würden sich leer unter der Ladeguteinheit drehen.

Zwischen der Winkelschiene 20a und dem Transportband 14a sowie zwischen der Winkelschiene 20b und dem Transportband 14b ist eine Nockenkette 22a bzw. 22b zu erkennen. Die Nockenketten 22a, 22b weisen jeweils mehrere Nocken 24 auf, die an einigen Kettengliedern der Nockenketten 22a, 22b befestigt sind. In der Darstellung der Fig. 1 ist zu erkennen, dass eine Oberseite der Nocken 24 geringfügig unterhalb einem Niveau der horizontalen Auflageflächen der Winkelschienen 20a, 20b angeordnet ist. Im angehobenen Zustand der Winkelschienen 20a, 20b, wie er in der Fig. 1 dargestellt ist, können die Nocken 24 an den Nockenketten 22a, 22b somit unter einem Lastaufnahmemittel an eine gewünschte Position bewegt werden. Auf der anderen Seite befinden sich die Oberseiten der Nocken 24 der Nockenketten 22a,22b oberhalb einer Oberseite der Transportbänder 14a, 14b. Wird daher eine Ladeguteinheit durch Absenken der Winkelschienen 20a, 20b auf den Oberseiten der Nocken 24 abgesetzt, so können sich die Transportbänder 14a, 14b unter dieser Ladeguteinheit hinweg bewegen. Die Transportbänder 14a, 14b können somit bei abgesenkten Winkelschienen 20a, 20b Ladeguteinheiten vom Transporttisch 18 weg- oder auf diesen heraufbefördern, ohne dass andere Ladeguteinheiten, die dann auf den Nocken 24 aufsitzen, relativ zum Lastaufnahmemittel 10 bewegt werden. Die Nocken 24 an den Nockenketten 22a, 22b dienen somit als Abstandshalter, um Ladeguteinheiten im Abstand von den Transportbändern 14a, 14b zu halten.

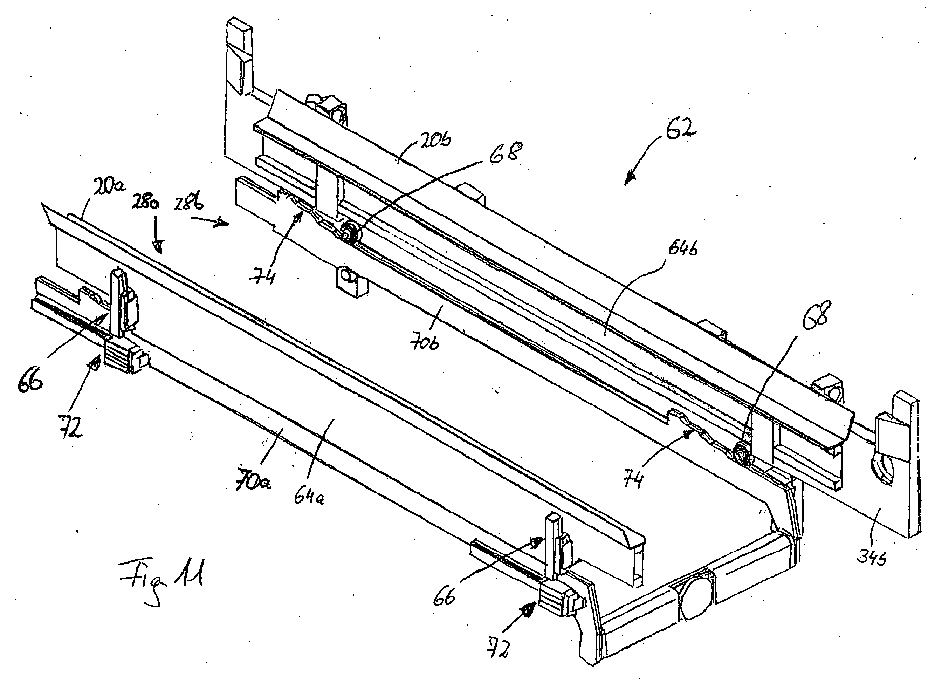

Die Winkelschienen 20a, 20b werden mittels jeweils einer Kulissenführung 28a, 28b in ihrer Höhenlage verstellt. Die Winkelschienen 20a, 20b sind am Rahmen 12 des Lastaufnahmemittels 10 so geführt, dass sie lediglich in vertikaler Richtung, in der Darstellung der Fig. 1 und der Fig. 2 also von oben nach unten bzw. von unten nach oben, bewegt werden können. Die Kulissenführungen 28a, 28b sind mittels eines Querbalkens 30 miteinander verbunden, so dass sie gleichzeitig und synchron relativ zum Rahmen 12 des Lastaufnahmemittels 10 und parallel zum Transporttisch 18 verschoben werden können. Eine detaillierte Erläuterung der Kulissenführungen 28a, 28b erfolgt nachstehend im Zusammenhang mit Fig. 11.

Die Darstellung der Fig. 2 zeigt die Einzelheit II der Fig. 1 vergrößert. Gut zu erkennen ist das Transportband 14a und die im angehobenen Zustand dargestellte Winkelschiene 20a. Zwischen der Winkelschiene 20a sowie dem Transportband 14a ist ein Nocken 24 auf der Nockenkette 22a zu erkennen. Der Nocken 24 ist an einem Kettenglied 26 befestigt. Die Nockenkette 22a ist über ein Kettenrad 32 umgelenkt, das wiederum auf einer Welle angeordnet ist, die durch eine Seitenwand 34a des Lastaufnahmemittels 10 geführt ist. Die Seitenwand 34a ist fest mit dem Rahmen 12 verbunden. Auf der, dem Kettenrad 32 gegenüberliegenden Seite der Seitenwand 34a ist auf der Welle ein Riemenrad 36 angeordnet, das in Fig. 1 zu erkennen ist. Mittels eines Antriebsriemens 38 ist das Riemenrad 36 mit zwei weiteren Riemenrädern und einer Welle 40 verbunden, die unter dem Transporttisch 18 hindurch auf die gegenüberliegende Seite des Lastaufnahmemittels 10 geführt ist und dort mittels einer gleichartigen Anordnung mit einem Kettenrad verbunden ist, das die in der Darstellung der Fig. 1 rechte Nockenkette 22b antreibt. Beide Nockenketten 22a, 22b können damit synchron zueinander bewegt werden.

Wie bereits ausgeführt wurde zeigen die Darstellungen der Fig. 1 und Fig. 2 die Winkelschienen 20a, 20b im angehobenen Zustand. Sowohl die Nockenketten 22a, 22b als auch die Transportbänder 14a, 14b können sich somit unter einer gegebenenfalls auf den Winkelschienen 20a, 20b aufliegenden Ladeguteinheit frei bewegen.

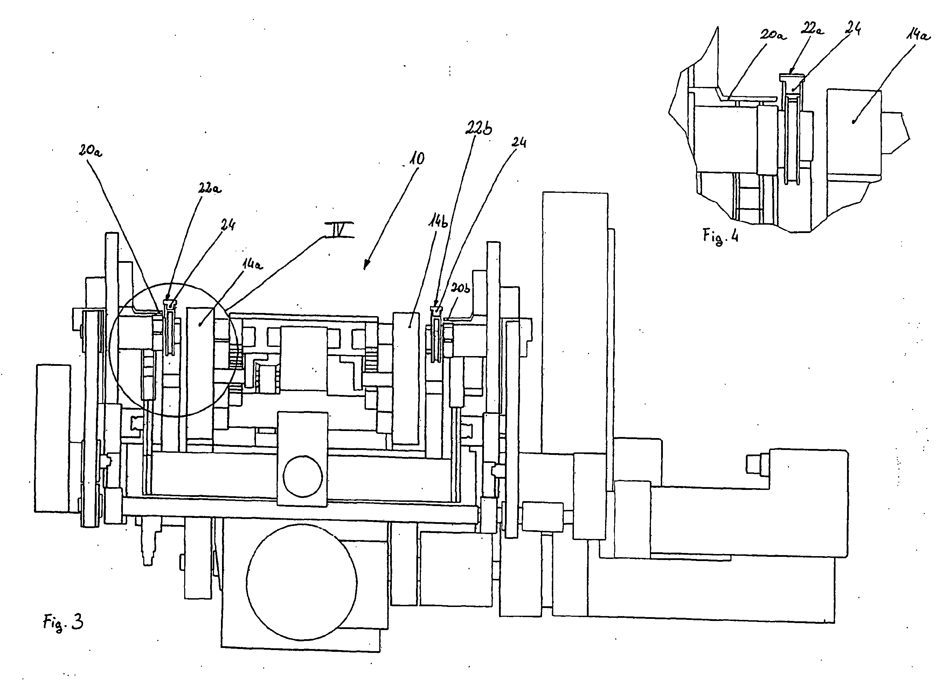

Die Darstellung der Fig. 3 zeigt das Lastaufnahmemittel 10 der Fig. 1, wobei sich die Winkelschienen 20a, 20b in der abgesenkten Stellung befinden. In dieser abgesenkten Stellung ist eine Auflagefläche der Winkelschienen 20a, 20b für Ladeguteinheiten sowohl unterhalb einer Oberseite der Transportbänder 14a, 14b als auch unterhalb einer Oberseite der Nocken 24 an den Nockenketten 22a, 22b angeordnet. Eine Ladeguteinheit könnte somit auf den Oberseiten der Nocken 24 aufsitzen, während sich die Transportbänder 14a, 14b bewegen. Sobald eine Ladeguteinheit auf den Oberseiten der Nocken 24 aufsitzt, kann infolgedessen eine weitere Ladeguteinheit mittels der Transportbänder 14a, 14b auf das Lastaufnahmemittel 10 befördert oder von dem Lastaufnahmemittel 10 weggefördert werden. Da sich die Oberseiten der Winkelschienen 20a, 20b der Aushubeinrichtung unterhalb der Oberseiten der Transportbänder 14a, 14b befinden, können Ladeguteinheiten auf das Lastaufnahmemittel 10 befördert werden und kommen mit ihren Unterseiten oberhalb der Auflageflächen der Winkelschienen 20a, 20b zu liegen.

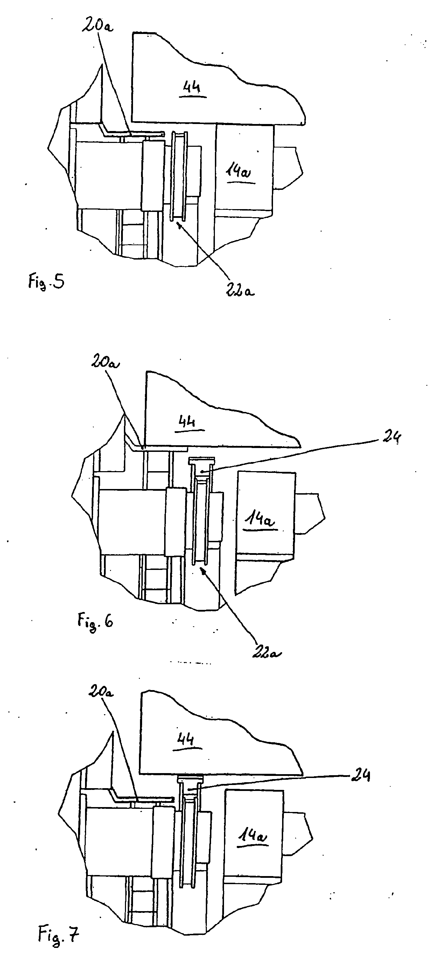

Die Darstellungen der Fig. 5, 6 und 7 zeigen verschiedene Betriebszustände des erfindungsgemäßen Lastaufnahmemittels. Eine Ladeguteinheit ist in diesen Figuren abschnittsweise dargestellt und mit der Bezugsziffer 44 bezeichnet.

In der Darstellung der Fig. 5 ist die Winkelschiene 20a abgesenkt und die Nockenkette 22a ist in eine Position bewegt worden, in der sich kein Nocken unterhalb der Ladeguteinheit 44 befindet. Der Nocken 24 befindet sich in einer in Fig. 5 nicht sichtbaren Position. Die Ladeguteinheit 44 liegt somit ausschließlich auf dem Transportband 14a und dem in der Darstellung der Fig. 5 nicht erkennbaren Transportband 14b auf. In dem in Fig. 5 dargestellten Betriebszustand kann die Ladeguteinheit 44 somit vom Lastaufnahmemittel 10 herunter gefördert werden, beispielsweise in einen Regalplatz hinein. Alternativ kann die Ladeguteinheit 44 auf das Lastaufnahmemittel 10 gefördert werden, beispielsweise von einem Regalplatz oder einem Einlagerübergabeplatz. Weiterhin ist es möglich, die Ladeguteinheit 44 auf dem Lastaufnahmemittel 10 zu verlagern, beispielsweise um Platz für weitere, aufzunehmende Ladeguteinheiten zu schaffen.

Die Darstellung der Fig. 6 zeigt die Aushubeinrichtung und speziell die Winkelschiene 20a in angehobenem Zustand. Die Ladeguteinheit 44 liegt somit ausschließlich auf der Winkelschiene 20a sowie der in Fig. 6 nicht dargestellten Winkelschiene 20b auf. Das Transportband 14a sowie die Nockenkette 22a können somit frei bewegt werden und beispielsweise können mehrere Nocken 24 unterhalb der Ladeguteinheit 44 platziert werden, da mittels der Winkelschiene 20a die Ladeguteinheit 44 über das Niveau angehoben wird, auf dem sich die Oberseite der Nocken 24 befinden.

Die Darstellung der Fig. 7 zeigt dann einen weiteren Betriebszustand, indem die Ladeguteinheit 44 ausschließlich auf den Nocken 24 aufliegt. Die Nocken 24 dienen somit als Abstandshalter, um die Ladeguteinheit 44 in einem vom Transportband 14a abgehobenen Zustand zu halten, obwohl die Aushubeinrichtung mit der Winkelschiene 20a bereits wieder unter das Niveau des Transportbandes 14a abgesenkt ist. In dem in Fig. 7 dargestellten Zustand können somit beispielsweise weitere Ladeguteinheiten auf das Lastaufnahmemittel 10 aufgenommen werden, ohne dass die Ladeguteinheit 44 relativ zum Lastaufnahmemittel 10 verschoben wird.

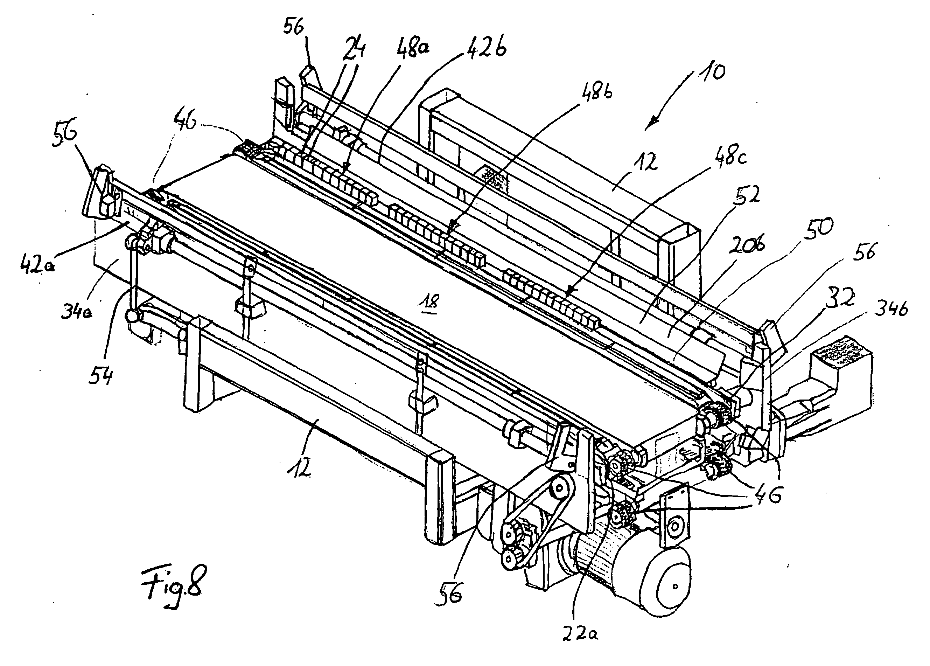

Die Darstellung der Fig. 8 zeigt das Lastaufnahmemittel 10 der Fig. 1 in einer Ansicht von schräg oben. Es ist dabei festzustellen, dass die Transportbänder 14a, 14b abgenommen wurden, so dass Umlenkrollen 46 für die Transportbänder erkennbar sind.

Gut zu erkennen ist in der Darstellung der Fig. 8, dass die Nockenketten 22a, 22b, wobei in der Darstellung der Fig. 8 lediglich die Nockenkette 22b im Bereich ihres Obertrums zu erkennen ist, jeweils drei Nockengruppen 48a, 48b und 48c aufweisen, die jeweils aus dreizehn unmittelbar nebeneinander angeordneten Nocken 24 gebildet sind. Jede Nockengruppe 48a, 48b, 48c stellt somit eine annähernd durchgehende Auflagefläche für eine Ladeguteinheit bereit. Da jeder der Nocken 24 jedoch auf einem anderen Kettenglied der Nockenkette 22b befestigt ist, können sich die Nocken 24 bei der Umlenkung um die Kettenräder 32 voneinander entfernen. Die Kettenräder 32 können dadurch einen kleinen Durchmesser aufweisen und die Nockenketten 22a, 22b sowie deren Antrieb können platzsparend im Lastaufnahmemittel 10 untergebracht werden.

In der Darstellung der Fig. 8 ist weiterhin die Winkelschiene 20b zu erkennen, wobei die nicht erkennbare Winkelschiene 20a identisch aufgebaut ist. Die Winkelschiene 20b erstreckt sich im Wesentlichen über die gesamte Länge des Lastaufnahmemittels 10 und ist so lang ausgeführt, dass vier Ladeguteinheiten, die nebeneinandergestellt annähernd die komplette Länge des Transporttisches 18 überdecken würden, gleichzeitig angehoben werden können. Wie bereits in der Darstellung der Fig. 1 bis 4 zu erkennen war, sind die Winkelschienen 20a, 20b nicht rechtwinklig abgebogen, sondern weisen zwischen der horizontal angeordneten Auflagefläche 50 und der seitlichen Anschlagfläche 52 einen Winkel von mehr als 90° auf. Sollte daher eine Ladeguteinheit leicht seitlich verschoben oder schief auf den Transportbändern 14a, 14b oder den Nockengruppen 48a, 48b, 48c angeordnet sein, so wird diese Ladeguteinheit beim Anheben der Winkelschienen 20a, 20b automatisch so ausgerichtet, dass ihre Seitenkanten exakt parallel zu den Winkelschienen 20a, 20b verlaufen.

Die Winkelschienen 20a, 20b sind so an den Seitenwänden 34a, 34b des Lastaufnahmemittels 10 geführt, dass diese lediglich senkrecht zum Transporttisch 18 bewegt werden können. Angetrieben werden die Winkelschienen 20a, 20b mittels den Kulissenführungen 28a, 28b, die nachstehend im Zusammenhang mit Fig. 11 erläutert werden.

In Fig. 8 sind insgesamt vier L-förmige Endanschläge 56 zu erkennen, die jeweils an einem freien Ende von Wellen 42a, 42b drehfest angeordnet sind. Die Wellen 42a, 42b werden wiederum mittels einer Antriebsstange 54 bewegt, die mechanisch, elektrisch, hydraulisch oder pneumatisch bewegt wird. Die Wellen 42a, 42b sind jeweils drehbar an den Seitenteilen 34a, 34b gelagert. Mittels der Wellen 42a, 42b können die Endanschläge 56 in den Transportweg von Ladeguteinheiten auf dem Lastaufnahmemittel 10 bewegt werden. In der Darstellung der Fig. 8 sind diese L-förmigen Endanschläge 56 in ihrer Freigabeposition dargestellt. Durch Drehung der Wellen 42a, 42b können diese Endanschläge 56 so verschwenkt werden, dass auf dem Lastaufnahmemittel 10 befindliche Ladeguteinheiten nicht von diesem heruntergefördert werden können. Die Endanschläge 56 werden in ihre Blockierstellung verfahren, wenn das Lastaufnahmemittel 10 entlang einer Regalgasse verfahren wird, um zu verhindern, dass sich durch Beschleunigungskräfte Ladeguteinheiten vom Lastaufnahmemittel 10 herunterbewegen oder dass durch eine Fehlfunktion der Antriebsmotoren für die Transportbänder 14a, 14b oder die Nockenketten 22a, 22b Ladeguteinheiten vom Transporttisch 18 herunterbewegt werden.

Die Darstellung der Fig. 9 zeigt das Lastaufnahmemittel 10 der Fig. 8 bei ausgefahrenem Transporttisch 18. Wie zu erkennen ist, ist der Transporttisch 18 auf einem Zwischenschlitten 58 verschiebbar angeordnet, der wiederum verschiebbar auf Schlittenführungen 60 angeordnet ist, wobei die Schlittenführungen 60 fest mit dem Rahmen 12 des Lastaufnahmemittels 10 verbunden sind. Der Transporttisch 18 kann dadurch um seine gesamte Länge ausgefahren werden. Dies ist beispielsweise erforderlich, wenn das Lastaufnahmemittel 10 vor einem Regalplatz angeordnet ist und gleichzeitig vier Ladeguteinheiten oder eine Ladeguteinheit mit vierfacher Tiefe auf den Transporttisch 18 übernommen werden soll. Der Transporttisch 18 wird dann zusammen mit den Transportbändern 14a, 14b unter die Ladeguteinheiten im Regal gefahren. Das Lastaufnahmemittel 10 wird dann insgesamt angehoben und der Transporttisch 18 wird wieder in die in der Fig. 8 dargestellte Lage bewegt. Nach dem Einklappen der Endanschläge 56 kann das Lastaufnahmemittel 10 dann innerhalb der Regalgasse verfahren werden.

Die Darstellung der Fig. 10 zeigt die Einzelheit X der Fig. 9 vergrößert. Auch in der vergrößerten Darstellung sind Kettenglieder 26 aber lediglich schematisch als durchgehendes Band dargestellt. Tatsächlich besteht die Nockenkette 22a aus einzelnen, drehbar miteinander verbundenen Kettengliedern 26. Gut zu erkennen ist das Kettenrad 32, das die Nockenkette 22a umlenkt. Jeder der Nocken 24 ist an einem anderen Kettenglied 26 befestigt, so dass die Nocken 24, die in der in Fig. 10 dargestellten Stellung eine annähernd durchgängige Oberseite zum Abstellen einer Ladeguteinheit bilden, im Bereich des Kettenrades 32 auseinanderklappen können und dadurch die Nockenkette 22a problemlos umgelenkt wird. Die Nocken 24 können beispielsweise selbst als Kettenglieder ausgebildet und gelenkig miteinander verbunden sein.

Die Darstellung der Fig. 11 zeigt die Aushubeinrichtung 62, wobei lediglich die für die Aushubeinrichtung wesentlichen Teile dargestellt wurden und beispielsweise die Seitenteile des Rahmens der Übersichtlichkeit halber nicht dargestellt wurden. Die Aushubeinrichtung 62 weist die beiden Winkelschienen 20a, 20b auf, die jeweils mit einem Hilfsrahmen 64a, 64b verbunden sind und die mittels der Kulissenführungen 28a, 28b angehoben und abgesenkt werden können. Die Hilfsrahmen 64a, 64b sind mittels Längsführungen 66 jeweils in vertikaler Richtung verschiebbar an den Seitenteilen 34a, 34b befestigt, wobei das Seitenteil 34a in der Darstellung der Fig. 11 nicht gezeigt ist. Die Hilfsrahmen 64a, 64b sind jeweils mit zwei Rollen 68 versehen, die auf Kulissenschiebern 70a, 70b laufen. Die Kulissenschieber 70a, 70b sind wiederum mittels Längsführungen 72 parallel zu einer Transportrichtung auf dem Lastaufnahmemittel 10, also parallel zu den Winkelschienen 20a, 20b verschiebbar an den Seitenteilen 34a, 34b angeordnet. Werden die Kulissenschieber 70a, 70b ausgehend von der in Fig. 11 dargestellten Stellung verschoben, in Fig. 11 also nach unten rechts, so gelangen die Rollen 68 auf Rampen 74 auf den Kulissenschiebern 70a, 70b und die Winkelschienen 20a, 20b werden in vertikaler Richtung angehoben. Mittels der Aushubeinrichtung 62 können dabei auch schwere Ladeguteinheiten problemlos angehoben werden und die Aushubeinrichtung 62 ist konstruktiv vergleichsweise einfach, vor allem aber zuverlässig ausgebildet. Eine Verschiebung der Kulissenschieber 70a, 70b kann beispielsweise mittels eines nicht dargestellten Pneumatik- oder Hydraulikzylinders erfolgen. Die Winkelschienen 20a, 20b weisen eine Länge auf, die das Anheben von vier nebeneinander angeordneten Ladeguteinheiten ermöglicht. Mittels der Kulissenschieber 70a, 70b kann dabei sichergestellt werden, dass die beiden Winkelschienen 20a, 20b exakt parallel und in ihrer horizontalen Lage verbleibend synchron angehoben werden.

Die Darstellung der Fig. 12 zeigt den Transporttisch 18 in seiner ausgefahrenen Stellung, wobei der Übersichtlichkeit halber zahlreiche Teile des Lastaufnahmemittels 10 weggelassen wurden. Zu erkennen sind der Zwischenschlitten 58 und die Schlittenführungen 60 sowie die mehrfach umgelenkten Transportriemen 14a, 14b. Die Transportriemen 14a, 14b sind in einer sogenannten Omegaanordnung verlegt, da, am Beispiel des Transportriemens 14a, ein nicht dargestelltes Antriebsrad in einer Schlaufe 76 des Antriebsriemens 14a angeordnet wird, die etwa die Form eines auf dem Kopf stehenden Omegas hat. Diese sogenannte Omega-Anordnung mit der Schlaufe 76 hat den Vorteil, dass der Antriebsmotor für den Antriebsriemen 14a unterhalb der Schlittenanordnung mit den Schlittenführungen 60, dem Zwischenschlitten 58 und dem Transporttisch 18 angeordnet werden kann. Der Schlittenantrieb für den Transporttisch 18 wird mit einem separaten Motor 78 bewirkt, der über Antriebsriemen 80 eine Ausfahrbewegung des Transporttisches 18 bewirkt. Der Transporttisch 18 kann dabei von der in Fig. 12 dargestellten, vollständig nach rechts ausgefahrenen Stellung über eine Mittenstellung, wie sie beispielsweise in Fig. 8 dargestellt ist, in eine um seine gesamte Länge nach links ausgefahrene Stellung verschoben werden. Das Lastaufnahmemittel 10 kann dadurch Regalplätze bedienen, die rechts oder links einer Regalgasse angeordnet sind. Der Antriebsmotor 78 für den Schlittenantrieb ist dabei so mittels einer Steuerung auf den Antriebsmotor für die Transportriemen 14a, 14b abgestimmt, dass sich ein Abschnitt 82a, 82b der Transportriemen 14a, 14b, der während der Schlittenbewegung neben dem Transporttisch 18 liegt, während des gesamten Ausfahrvorgangs der Schlittenanordnung relativ zum Transporttisch 18 nicht bewegt. Auf den Transportriemen 14a, 14b aufsitzende Ladeguteinheiten verbleiben somit relativ zum Transporttisch 18 in Ruhe, auch wenn dieser ausgehend von seiner in Fig. 8 dargestellten Mittenstellung in die in Fig. 12 dargestellte, vollständig ausgefahrene Stellung verfährt.

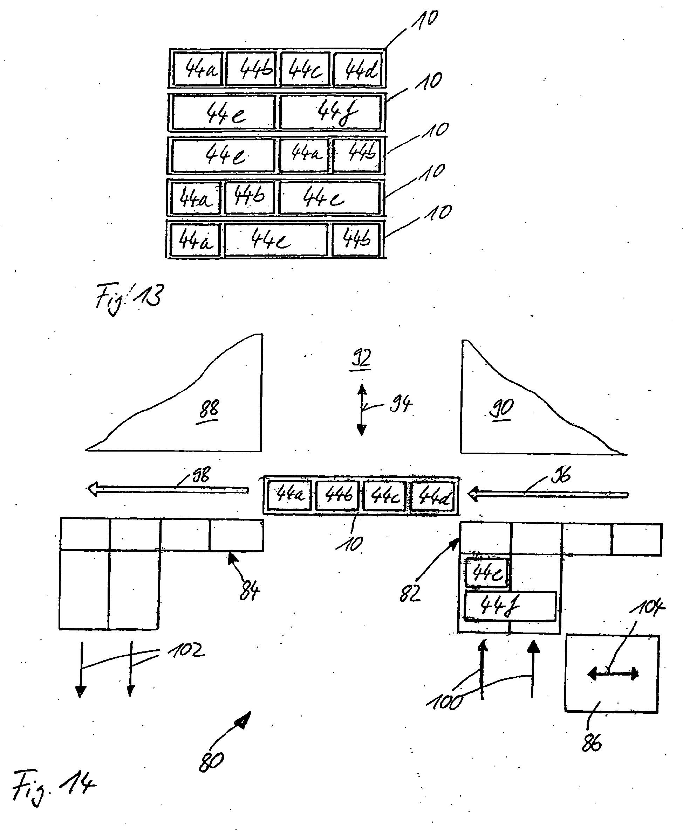

Die schematische Darstellung der Fig. 13 zeigt unterschiedliche Möglichkeiten der Belegung eines Lastaufnahmemittels 10 mit Ladeguteinheiten.

In der in Fig. 13 obersten Zeile sind insgesamt vier Ladeguteinheiten 44a, 44b, 44c und 44d auf dem Lastaufnahmemittel 10 angeordnet. Alle diese Ladeguteinheiten 44a, 44b, 44c und 44d sind gleich lang.

In der in Fig. 13 zweiten Zeile sind zwei Ladeguteinheiten 44e und 44f auf dem Lastaufnahmemittel 10 angeordnet, wobei die Ladeguteinheiten 44e, 44f jeweils die doppelte Länge der Ladeguteinheit 44a aufweisen.

In der in Fig. 13 dritten Zeile ist die Ladeguteinheit 44e mit doppelter Länge linksbündig und daneben sind die beiden Ladeguteinheiten 44a, 44b mit jeweils einfacher Länge angeordnet.

In der in Fig. 13 vierten Zeile ist die Ladeguteinheit 44a linksbündig und daneben die ebenfalls einfach lange Ladeguteinheit 44b angeordnet. Rechtsbündig ist die doppelt lange Ladeguteinheit 44e angeordnet.

In der in Fig. 13 letzten Zeile ist die Ladeguteinheit 44a linksbündig, die Ladeguteinheit 44b rechtsbündig und zwischen diesen Ladeguteinheiten 44a, 44b mit jeweils einfacher Länge ist die doppelt lange Ladeguteinheit 44e angeordnet.

Bereits aus den unterschiedlichen Belegungsmöglichkeiten des Lastaufnahmemittels 10, die in Fig. 13 dargestellt sind, wird dessen große Flexibilität beim Transport unterschiedlich langer Ladeguteinheiten ersichtlich. Mittels der erfindungsgemäßen Kombination der Aushubeinrichtung und der Abstandshalter ist es dabei möglich, beliebige der in Fig. 13 dargestellten Ladeguteinheiten 44a bis 44f vom Transportband abzuheben oder auf diesem zu belassen, um einen Transport vom Lastaufnahmemittel herunter oder auf dieses herauf zu bewirken. Übertragen auf die Darstellung der Fig. 13 ist es somit möglich, beispielsweise lediglich die Ladeguteinheit 44a in Zeile 1 abzutransportieren, die Ladeguteinheiten 44b, 44c, 44d hingegen auf dem Lastaufnahmemittel 10 zu belassen. Nach Abtransport der Ladeguteinheit 44a kann dann in ähnlicher Weise die Ladeguteinheit 44d zur gegenüberliegenden Seite hin abtransportiert werden, ohne dass die Ladeguteinheiten 44b, 44c ihre Position relativ zum Lastaufnahmemittel 10 verändern würden.

Am Beispiel der in Fig. 13 vierten Zeile ist es durch die Kombination der Aushubeinrichtung mit den Abstandshaltern möglich, beispielsweise zunächst die Ladeguteinheit 44a nach links abzutransportieren und die Ladeguteinheiten 44b, 44e hingegen auf dem Lastaufnahmemittel zu belassen. Um einen Abtransport der Ladeguteinheit 44b nachfolgend ebenfalls nach links zu ermöglichen, können dann die Ladeguteinheiten 44b, 44e auf dem Lastaufnahmemittel 10 verlagert werden, bis die Ladeguteinheit 44b linksbündig angeordnet ist. Diese Verlagerung kann auch während einer Bewegung des Lastaufnahmemittels 10 entlang einer Lagergasse erfolgen. Alternativ kann aber beispielsweise auch eine weitere einfach tiefe Ladeguteinheit zu den Ladeguteinheiten 44b, 44e auf das Lastaufnahmemittel 10 übernommen werden.

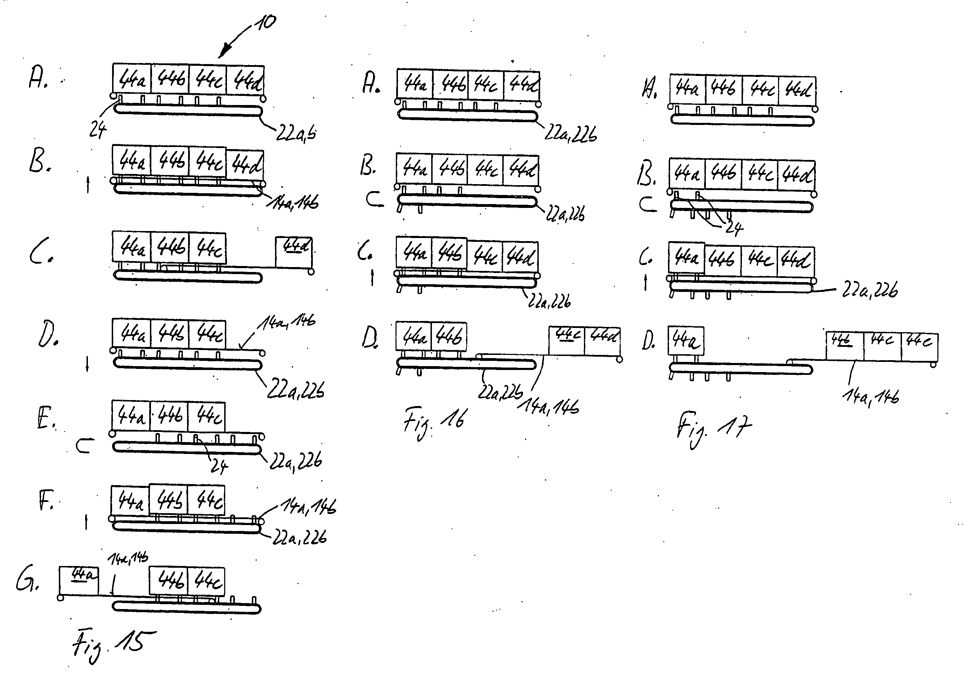

Anhand der Darstellungen der Fig. 15, 16 und 17 sind mehrere Möglichkeiten dargestellt, wie Ladeguteinheiten vom Lastaufnahmemittel 10 abtransportiert werden können.

Am Beispiel der Fig. 15 sind insgesamt vier einfach tiefe Ladeguteinheiten 44a, 44b, 44c und 44d auf dem Lastaufnahmemittel 10 angeordnet. Die Nockenketten 22a, 22b werden dann so verfahren, dass unter den Ladeguteinheiten 44a, 44b und 44c Nocken 24 angeordnet sind, siehe Zeile A. Nach dem Anheben der Nocken 24, siehe Zeile B, was selbstverständlich auch durch ein Absenken der Aushubeinrichtung erreicht werden könnte, liegt dann lediglich noch die Ladeguteinheit 44d auf den Transportbändern 14a, 14b auf und kann, siehe Zeile C, nach rechts vom Lastaufnahmemittel 10 herunter transportiert werden.

Es verbleiben somit, siehe Zeile D, lediglich noch die Ladeguteinheiten 44a, 44b, 44c auf dem Lastaufnahmemittel 10. Die Nockenketten 22a, 22b werden dann wieder abgesenkt bzw. die Ladeguteinheiten 44a, 44b, 44c mittels der Aushubeinrichtung angehoben.

Gemäß Zeile E werden die Nockenketten 22a, 22b dann so verfahren, dass Nocken 24 unterhalb der Ladeguteinheiten 44b, 44c angeordnet sind. Nach Anheben der Nockenketten 22a, 22b, siehe Zeile F, liegt dann lediglich die Ladeguteinheit 44a auf den Transportbändern 14a, 14b auf und kann, siehe Zeile G, nach links vom Lastaufnahmemittel 10 herunter transportiert werden.

Eine weitere Möglichkeit des flexiblen Einsatzes zeigt die schematische Darstellung der Fig. 16. Gemäß Zeile A und B werden die Nockenketten 22a, 22b im ausgehobenen Zustand der Ladeguteinheiten 44a, 44b, 44c und 44d so verfahren, dass lediglich unter den Ladeguteinheiten 44a, 44b Nocken angeordnet sind. Nach dem Anheben der Nockenketten 22a, 22b liegen somit lediglich noch die Ladeguteinheiten 44c, 44d auf den Transportbändern 14a, 14b auf und können, siehe Zeile D, gemeinsam nach rechts abtransportiert werden.

Anhand der Darstellung der Fig. 17 ist zu erkennen, dass, siehe Zeile A und B, die Nockenketten 22a" 22b so verfahren werden, dass lediglich unterhalb der Ladeguteinheit 44a Nocken 24 angeordnet sind. Nach dem Anheben der Nockenketten 22a, 22b, siehe Zeile C, wird somit lediglich die Ladeguteinheit 44a im Abstand von den Transportbändern 14a,14b gehalten und die Ladeguteinheiten 44b, 44c und 44e können, siehe Zeile D, gemeinsam nach rechts abtransportiert werden.

Die Darstellung der Fig. 14 zeigt schematisch eine erfindungsgemäße Förderanlage 80 mit einem Lastaufnahmemittel 10, einem Einlagerübergabeplatz 82, einem Auslagerübergabeplatz 84, einem Zwischenspeicherplatz 86 und zwei Regalen 88, 90, zwischen denen eine Regalgasse 92 angeordnet ist. Das Lastaufnahmemittel 10 kann entlang einem Doppelpfeil 94 in die Regalgasse 92 hinein und auch, senkrecht zur Papierebene der Fig. 14, in Höhenrichtung verfahren werden, um alle Regalplätze in den Regalen 88, 90 anfahren zu können. Das Lastaufnahmemittel 10 kann darüber hinaus genau zwischen dem Einlagerübergabeplatz 82 und dem Auslagerübergabeplatz 84 angeordnet werden, gegenüber der Darstellung der Fig. 14 also noch um etwa eine Breite des Lastaufnahmemittels 10 nach unten versetzt. In der Stellung zwischen dem Einlagerübergabeplatz 82 und dem Auslagerübergabeplatz 84 können dann gleichzeitig entlang den Pfeilen 96, 98 Ladeguteinheiten vom Einlagerübergabeplatz 82 auf das Lastaufnahmemittel 10 und vom Lastaufnahmemittel 10 auf den Auslagerübergabeplatz 84 übergeben werden.

Auf dem Lastaufnahmemittel 10 sind vier Ladeguteinheiten 44a, 44b, 44c und 44d dargestellt, die jeweils eine einfache Tiefe aufweisen. Sowohl der Einlagerübergabeplatz 82 als auch der Auslagerübergabeplatz 84 weisen vier hintereinander angeordnete Lagerplätze auf, um gleichzeitig vier Ladeguteinheiten 44a, 44b, 44c, 44d mit jeweils einfacher Tiefe oder Ladeguteinheiten anderer Länge aufzunehmen, die insgesamt eine vierfache Tiefe haben.

Stromaufwärts des Einlagerübergabeplatzes 82 ist eine schematisch dargestellte Fördertechnik angeordnet, mittels der weitere Ladeguteinheiten 44e und 44f in Richtung der beiden Pfeile 100 auf den Einlagerübergabeplatz 82 übergeben werden können. Die Ladeguteinheit 44e ist dabei einfach tief, die Ladeguteinheit 44f zweifach tief ausgeführt. Die Ladeguteinheiten 44e und 44f werden auf den Einlagerübergabeplatz 82 befördert und dort, beispielsweise durch Verschiebung nach links oder rechts, so angeordnet, dass nach Möglichkeit immer Ladeguteinheiten mit insgesamt vierfacher Länge gemeinsam auf das Lastaufnahmemittel 10 übergeben werden können, so dass dieses immer vollständig belegt ist.

An den Auslagerübergabeplatz 84 schließt sich ebenfalls Fördertechnik an, mit der Ladeguteinheiten in Richtung der Pfeile 102 abtransportiert werden können.

Die Förderanlage 80 ist stromaufwärts des Einlagerübergabeplatzes 82 mit dem Zwischenspeicherplatz 86 versehen. Einzelne Ladeguteinheiten können auf den Zwischenspeicherplatz 86 verschoben werden und von diesem wieder auf die Fördertechnik übergeben werden, wie durch den Doppelpfeil 104 angedeutet ist. Der Zwischenspeicherplatz 86 kann dadurch als Warteplatz genutzt werden, wenn beispielsweise die einfach tiefe Ladeguteinheit 44e geparkt werden soll, da nachfolgend mehrere vollständige Ladungen für das Lastaufnahmemittel 10 angefördert werden, die an gleiche oder benachbarte Regalplätze verbracht werden sollen. Die Ladeguteinheit 44e kann dann auf dem Zwischenspeicherplatz 86 verbleiben, bis weitere Ladeguteinheiten angefördert werden, die zum einen eine vollständige Belegung des Lastaufnahmemittels 10 gemeinsam mit der Ladeguteinheit 44e ermöglichen und an räumlich benachbarte Regalplätze wie die Ladeguteinheit 44e verbracht werden sollen. Auf diese Weise kann die Anzahl der Leerfahrten oder Fahrten mit unvollständiger Belegung des Lastaufnahmemittels 10 wesentlich reduziert werden. Alternativ ist daher eine Erhöhung des Durchsatzes der Förderanlage 80 möglich oder das Lastaufnahmemittel 10 sowie der Einlagerübergabeplatz 82 und der Auslagerübergabeplatz 84 können mit vergleichsweise geringer Geschwindigkeit betrieben werden, um beispielsweise große Wartungsintervalle zu erreichen und mit geringen Beschleunigungen des Ladeguts auskommen zu können.

## Patentansprüche

1. Lastaufnahmemittel (10), für ein Regalbediengerät, mit wenigstens einem Transportband (14a,14b) für Ladeguteinheiten (44) und einer Aushubeinrichtung (62) für Ladeguteinheiten (44), um Ladeguteinheiten (44) wahlweise vom Transportband (14a,14b) abzuheben und wieder auf dieses abzusenken, **dadurch gekennzeichnet, dass** wenigstens ein Abstandshalter (24) vorgesehen ist, wobei der Abstandshalter (24) an dem Lastaufnahmemittel (10) bewegbar und relativ zu den Ladeguteinheiten (44) unter wenigstens einer mittels der Aushubeinrichtung (62) bereits angehobenen Ladeguteinheit (44) so anordenbar ist, um die wenigstens eine Ladeguteinheit (44) unabhängig von der Stellung der Aushubeinrichtung (62) in einem vom Transportband (14a, 14b) abgehobenen Zustand zu halten.

2. Lastaufnahmemittel nach Anspruch 1, **dadurch gekennzeichnet, dass** der wenigstens eine Abstandshalter längs einem Transportweg auf dem Lastaufnahmemittel (10) bewegbar angeordnet ist.

3. Lastaufnahmemittel nach einem der vorstehenden Ansprüche, **dadurch gekennzeichnet, dass** der wenigstens eine Abstandshalter an einem am Lastaufnahmemittel (10) umlaufenden Antriebsmittel angeordnet ist.

4. Lastaufnahmemittel nach Anspruch 3, **dadurch gekennzeichnet, dass** mehrere Abstandshalter als Nocken (24) auf dem am Lastaufnahmemittel (10) umlaufenden Antriebsmittel angeordnet sind.

5. Lastaufnahmemittel nach Anspruch 4, **dadurch gekennzeichnet, dass** auf dem Antriebsmittel wenigstens zwei voneinander beabstandete Nockengruppen (48a, 48b, 48c) angeordnet sind, wobei jeder Nockengruppe (48a, 48b, 48c) eine Ladeguteinheit (44) zugeordnet werden kann.

6. Lastaufnahmemittel nach einem der vorstehenden Ansprüche, **dadurch gekennzeichnet, dass** die Aushubeinrichtung (62) ausgebildet ist, um alle auf dem Transportband (14a, 14b) befindlichen Ladeguteinheiten (44) gleichzeitig anzuheben.

7. Lastaufnahmemittel nach einem der vorstehenden Ansprüche, **dadurch gekennzeichnet, dass** die Aushubeinrichtung (62) wenigstens zwei Anschlagsleisten aufweist, die seitlich und/oder von unten an einer Ladeguteinheit (44) angreifen können.

8. Lastaufnahmemittel nach wenigstens einem der vorstehenden Ansprüche, **dadurch gekennzeichnet, dass** ein ausfahrbarer Transporttisch (18) vorgesehen ist, wobei das Transportband (14a, 14b) im Bereich der Oberseite des Transporttisches (18) geführt ist.

9. Lastaufnahmemittel nach Anspruch 8, **dadurch gekennzeichnet, dass** zum Antreiben des Transportbands (14a, 14b) und zum Antreiben des Transporttisches (18) separate Antriebsmotoren vorgesehen sind, wobei der Antriebsmotor des Transportbandes (14a, 14b) so angeordnet ist oder so angesteuert werden kann, dass sich das Transportband (14a, 14b) im Bereich der Oberseite des Transporttisches (18) beim Ausfahren des Transporttisches (18) relativ zu dessen Oberseite nicht bewegt.

10. Förderanlage, umfassend ein Regalbediengerät mit einem Lastaufnahmemittel (10) nach wenigstens einem der vorstehenden Ansprüche, **dadurch gekennzeichnet, dass** wenigstens ein Zwischenspeicherplatz (86) für wenigstens eine Ladeguteinheit (44) vorgesehen ist.

11. Förderanlage nach Anspruch 10, **dadurch gekennzeichnet, dass** der wenigstens eine Zwischenspeicherplatz (86) an einem Einlagerübergabeplatz (82) vorgesehen ist.

12. Förderanlage nach Anspruch 10 oder 11, **dadurch gekennzeichnet, dass** ein Einlagerübergabeplatz (82) gegenüberliegend einem Auslagerübergabeplatz (84) so angeordnet ist, dass das Lastaufnahmemittel (10) zwischen dem Einlagerübergabeplatz (82) und dem Auslagerübergabeplatz (84) angeordnet werden kann.

13. Verfahren zum Betreiben einer Förderanlage umfassend wenigstens ein Regalbediengerät mit einem Lastaufnahmemitter (10) nach einem der vorstehenden Ansprüche, **gekennzeichnet durch** Übernehmen wenigstens einer Ladeguteinheit (44) auf das Lastaufnahmemitter (10), Abheben der Ladeguteinheit von einem Transportband (14a,14b) des Lastaufnahmemittels (10) und nachfolgendes Übernehmen, Umlagern, Verdichten, und/oder Auslagern in einen Regalplatz wenigstens einer weiteren Ladeguteinheit (44).

14. Verfahren nach Anspruch 13, **gekennzeichnet durch** gleichzeitiges Übernehmen von Ladeguteinheiten (44) auf das Lastaufnahmemittel (10) vom Einlagerübergabeplatz (82) and Abgeben von Ladeguteinheiten (44) vom Lastaufnahmemittel (10) auf den Auslagerübergabeplatz (84)

15. Verfahren nach Anspruch 13 oder 14, **gekennzeichnet durch** Ändern der Reihenfolge mehrerer auf dem Lastaufnahmemittel (10) angeordneter Ladeguteinheiten (44) an einem Zwischenspeicherplatz (86) und/oder Sortieren von Ladeguteinheiten (44) auf dem Lastaufnahmemittel (10) nach ihrer Höhe.

## Claims

1. Load-handling means (10) for a storage/retrieval machine having at least one transport belt (14a, 14b) for material units (44) and a lifting-out device (62) for said material units (44) in order to optionally lift said material units (44) from the transport belt (14a, 14b) and to set them back down onto said transport belt, **characterized in that** at least one spacer (24) is provided, where said spacer (24) on the load-handling means (10) is movable and arrangeable relative to the material units (44) underneath at least one material unit (44) already lifted by the lifting-out device (62), in order to maintain the at least one material unit (44) in a state lifted off from the transport belt (14a, 14b) regardless of the position of the lifting-out device (62).

2. Load-handling means according to Claim 1, **characterized in that** the at least one spacer is arranged movably along a transport path on the load-handling means (10).

3. Load-handling means according to one of the preceding claims, **characterized in that** the at least one spacer is arranged on a drive means passing round the load-handling means (10).

4. Load-handling means according to Claim 3, **characterized in that** several spacers are arranged as cams (24) on the drive means passing round the load-handling means (10).

5. Load-handling means according to Claim 4, **characterized in that** at least two cam groups (48a, 48b, 48c) are arranged at a distance from one another on the drive means, where a material unit (44) can be assigned to each cam group (48a, 48b, 48c).

6. Load-handling means according to one of the preceding claims, **characterized in that** the lifting-out device (62) is designed to simultaneously lift all material units (44) located on the transport belt (14a, 14b).

7. Load-handling means according to one of the preceding claims, **characterized in that** the lifting-out device (62) has at least two stop strips which can engage a material unit (44) from the side and/or from underneath.

8. Load-handling means according to at least one of the preceding claims, **characterized in that** an extendable transport table (18) is provided, where the transport belt (14a, 14b) is guided in the area of the upper side of said transport table (18).

9. Load-handling means according to Claim 8, **characterized in that** separate drive motors are provided for driving the transport belt (14a, 14b) and for driving the transport table (18), where the drive motor of said transport belt (14a, 14b) is arranged or controlled such that said transport belt (14a, 14b) does not move relative to its upper side in the area of the upper side of the transport table (18) during extending of said transport table (18).

10. Conveying device comprising a storage/retrieval machine having a load-handling means (10) according to at least one of the preceding claims, **characterized in that** at least one interim storage point (86) for at least one material unit (44) is provided.

11. Conveying device according to Claim 10, **characterized in that** the at least one interim storage point (86) is provided at a storage transfer point (82).

12. Conveying device according to Claim 10 or 11, **characterized in that** a storage transfer point (82) is arranged opposite a retrieval transfer point (84) such that the load-handling means (10) can be arranged between the storage transfer point (82) and the retrieval transfer point (84).

13. Method for operating a conveying device comprising at least one storage/retrieval machine having a load-handling means (10) according to one of the preceding claims, **characterized by** transfer of at least one material unit (44) to the load-handling means (10), lifting of the material unit off a transport belt (14a, 14b) of the load-handling means (10) and subsequent transfer, relocation, concentration and/or retrieval into a shelf space of at least one other material unit (44).

14. Method according to Claim 13, **characterized by** simultaneous transfer of material units (44) to the load-handling means (10) from the storage transfer point (82) and delivery of material units (44) from the load-handling means (10) to the retrieval transfer point (84).

15. Method device according to Claim 13 or 14, **characterized by** alteration of the sequence of several material units (44) arranged on the load-handling means (10) at an interim storage point (86) and/or sorting of material units (44) on the load-handling means (10) according to their height.

## Revendications

1. Moyen de préhension des charges (10) pour un transstockeur, comprenant au moins une bande transporteuse (14a, 14b) pour unités de charge (44) et un dispositif de levage (62) pour unités de charge (44) destiné, selon les besoins, à soulever des unités de charge (44) au-dessus de la bande transporteuse (14a, 14b) et à les déposer de nouveau sur celle-ci, **caractérisé en ce qu'**est prévu au moins un écarteur (24), sachant que l'écarteur (24) est mobile sur le moyen de préhension des charges (10) et peut être placé relativement aux unités de charge (44) sous au moins une unité de charge (44) déjà soulevée par le dispositif de levage (62), afin de maintenir l'au moins une unité de charge (44) dans un état soulevé au-dessus de la bande transporteuse (14a, 14b) indépendamment de la position du dispositif de levage (62).

2. Moyen de préhension des charges selon la revendication 1, **caractérisé en ce que** l'au moins un écarteur est disposé de manière mobile le long d'une voie de transport sur le moyen de préhension des charges (10).

3. Moyen de préhension des charges selon l'une des revendications précédentes, **caractérisé en ce que** l'au moins un écarteur est disposé sur un moyen d'entraînement tournant autour du moyen de préhension des charges (10).

4. Moyen de préhension des charges selon la revendication 3, **caractérisé en ce que** plusieurs écarteurs sous forme de taquets (24) sont disposés sur le moyen d'entraînement tournant autour du moyen de préhension des charges (10).

5. Moyen de préhension des charges selon la revendication 4, **caractérisé en ce que** sur le moyen d'entraînement sont disposés au moins deux groupes de taquets (48a, 48b, 48c) distants l'un de l'autre, sachant qu'une unité de charge (44) peut être associée à chaque groupe de taquets (48a, 48b, 48c).

6. Moyen de préhension des charges selon l'une des revendications précédentes, **caractérisé en ce que** le dispositif de levage (62) est conçu pour soulever simultanément toutes les unités de charge (44) se trouvant sur la bande transporteuse (14a, 14b).

7. Moyen de préhension des charges selon l'une des revendications précédentes, **caractérisé en ce que** le dispositif de levage (62) présente au moins deux barres de butée qui peuvent s'appliquer sur une unité de charge (44) latéralement et/ou par dessous.

8. Moyen de préhension des charges selon au moins une des revendications précédentes, **caractérisé en ce qu'**est prévue une table transporteuse (18) déployable, la bande transporteuse (14a, 14b) étant guidée dans la zone de la face supérieure de la table transporteuse (18).

9. Moyen de préhension des charges selon la revendication 8, **caractérisé en ce que** des moteurs d'entraînement distincts sont prévus pour entraîner respectivement la bande transporteuse (14a, 14b) et la table transporteuse (18), sachant que le moteur d'entraînement de la bande transporteuse (14a, 14b) est disposé ou peut être commandé de manière telle que, dans la zone de la face supérieure de la table transporteuse (18), la bande transporteuse (14a, 14b) ne se déplace pas par rapport à la face supérieure de la table transporteuse (18) lorsque cette dernière est déployée.

10. Installation de transport comprenant un transstockeur avec un moyen de préhension des charges (10) selon au moins une des revendications précédentes, **caractérisée en ce qu'**est prévu au moins un emplacement de stockage intermédiaire (86) pour au moins une unité de charge (44).

11. Installation de transport selon la revendication 10, **caractérisée en ce que** l'au moins un emplacement de stockage intermédiaire (86) est prévu à proximité d'un poste de transfert et de stockage (82).

12. Installation de transport selon la revendication 10 ou 11, **caractérisée en ce qu'**un poste de transfert et de stockage (82) est disposé en face d'un poste de transfert et de déstockage (84) de manière telle que le moyen de préhension des charges (10) peut être disposé entre le poste de transfert et de stockage (82) et le poste de transfert et de déstockage (84).

13. Procédé de fonctionnement d'une installation de transport dotée d'au moins un transstockeur avec un moyen de préhension des charges (10) selon l'une des revendications précédentes, **caractérisé par** le transfert d'au moins une unité de charge (44) sur le moyen de préhension des charges (10), par le soulèvement de l'unité de charge d'une bande transporteuse (14a, 14b) du moyen de préhension des charges (10), suivi du transfert, du transstockage, du regroupement, et/ou du déstockage dans un casier de rayonnage d'au moins une autre unité de charge (44).

14. Procédé selon la revendication 13, **caractérisé par** la simultanéité du transfert d'unités de charge (44) provenant du poste de transfert et de stockage (82) sur le moyen de préhension des charges (10), et du dépôt d'unités de charge (44) provenant du moyen de préhension des charges (10) sur le poste de transfert et de déstockage (84).

15. Procédé selon la revendication 13 ou 14, caractérisé, au niveau d'un emplacement de stockage intermédiaire (86), par la modification de l'ordre de plusieurs unités de charge (44) disposées sur le moyen de préhension des charges (10), et/ou par le tri par hauteur d'unités de charge (44) sur le moyen de préhension des charges (10).
